# EUROPEAN PATENT APPLICATION

(11) **EP 2 753 010 A1**
(43) Date of publication of application: **09.07.2014**
(21) Application number: 11864829.4
(22) Date of filing: 22.09.2011
(51) Int. Cl.: H04J 14/02

(54) **WAVELENGTH DISTRIBUTION METHOD, OPTICAL NETWORK UNIT AND OPTICAL NETWORK SYSTEM IN OPTICAL COMMUNICATION SYSTEM**

(71) Applicant: Huawei Technologies Co., Ltd., Shenzhen, Guangdong 518129 (CN)
(72) Inventor: YE, Fei, Shenzhen, Guangdong 518129 (CN); GAO, Jianhe, Shenzhen, Guangdong 518129 (CN); ZHOU, Xiaoping, Shenzhen, Guangdong 518129 (CN)
(74) Representative: Thun, Clemens
(86) International application number: PCT/CN2011/080047
(87) International publication number: WO 2012/149764

(57) **Abstract**

Embodiments of the present invention provide a wavelength allocation method, an optical network unit, and an optical network system in an optical communication system and are related to the communications field. An operating wavelength of an optical module can be set according to information about a service provider, thereby simplifying a wavelength allocation process. The method includes: presetting a wavelength allocation table on an optical network unit; obtaining, according to a service provider of the optical network unit, wavelength information corresponding to the service provider of the optical network unit by using the wavelength allocation table; and transmitting or receiving an optical signal according to the obtained wavelength information corresponding to the service provider of the optical network unit, thereby simplifying the process of wavelength allocation, improving quality of service, and enhancing user experience.

## Description

### TECHNICAL FIELD

The present invention relates to the field of communications technologies, and in particular, to a wavelength allocation method, an optical network unit, and an optical network system in an optical communication system.

### BACKGROUND

A hybrid passive optical network (Passive Optical Network, PON) based on wavelength division multiplexing/time division multiplexing (Wavelength Division Multiplexing/Time Division Multiplexing, WDM/TDM) technologies combines WDM and TDM technologies.

In a WDM/TDM-based hybrid PON system, a message sent from an optical line terminal (Optical Line Terminal, OLT) to an optical network unit (Optical Network Unit, ONU) is referred to as a downstream message, and a wavelength carrying the downstream message is referred to as a downstream wavelength; a message sent from the ONU to the OLT is referred to as an upstream message, and a wavelength carrying the upstream message is referred to as an upstream wavelength. After the ONU is registered, the OLT communicates normally with the registered ONU. Multiple downstream wavelengths of the OLT coexist in a WDM manner, downstream data on each wavelength is transmitted to each ONU through an optical distribution network (Optical Distribution Network, ODN) in a TDM manner, and each ONU receives the downstream data according to identifiers assigned by the OLT. For an ONU, there may be multiple WDM wavelengths and upstream data carried on each wavelength is transmitted through the ODN to the OLT in a TDMA manner.

In the present hybrid PON system, an OLT allocates wavelengths based on a sequence number sent by an ONU. Because the ONU needs to send and receive information in the process of wavelength allocation, the ONU needs to adjust its transmit and receive wavelengths first, which leads to an excessively complicated and time-consuming process of wavelength allocation based on sequence numbers and results in poor user experience at present.

### SUMMARY

Embodiments of the present invention provide a wavelength allocation method, an optical network unit, and an optical network system in an optical communication system. An operating wavelength of an optical module can be set according to information about a service provider, simplifying the process of wavelength allocation, and enhancing user experience.

To achieve the objective, the embodiments of the present invention adopt the following technical solutions:

A wavelength allocation method in an optical communication system, including:
presetting a wavelength allocation table on an optical network unit, where the wavelength allocation table includes information about a service provider and wavelength information corresponding to the service provider;
obtaining, according to the service provider of the optical network unit, the wavelength information corresponding to the service provider of the optical network unit by using the wavelength allocation table; and
transmitting or receiving an optical signal according to the obtained wavelength information corresponding to the service provider of the optical network unit.

An optical network unit, including:
an information setting unit, configured to preset a wavelength allocation table on the optical network unit, where the wavelength allocation table includes information about a service provider and wavelength information corresponding to the service provider; and
a wavelength selection unit, configured to obtain, according to the service provider of the optical network unit, the wavelength information corresponding to the service provider of the optical network unit by using the wavelength allocation table, and transmit or receive an optical signal according to the obtained wavelength information corresponding to the service provider of the optical network unit.

An optical network system includes an optical line terminal and at least one optical network unit mentioned above.

Embodiments of the present invention provide a wavelength allocation method, an optical network unit, and an optical network system in an optical communication system. A wavelength allocation table is preset on an optical network unit, where the wavelength allocation table includes information about a service provider and wavelength information corresponding to the service provider; the wavelength information corresponding to the service provider of the optical network unit is obtained by using the wavelength allocation table; and an optical signal is transmitted or received according to the obtained wavelength information corresponding to the service provider of the optical network unit. Therefore, the process of wavelength allocation is simplified, quality of service is improved, and user experience is enhanced.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of a wavelength allocation method in an optical communication system according to Embodiment 1;
FIG. 2 is a schematic flowchart of a wavelength allocation method in an optical communication system according to Embodiment 2;
FIG. 3 is a block diagram of an optical network unit according to Embodiment 3;
FIG. 4 is a block diagram of another optical network unit according to Embodiment 3; and
FIG. 5 shows an optical network system according to Embodiment 3.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

### Embodiment 1

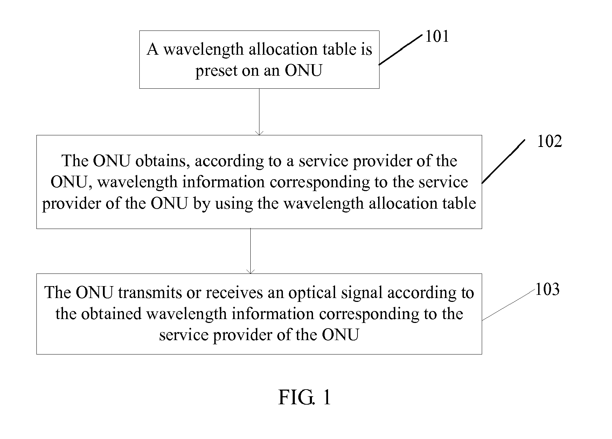

This embodiment of the present invention provides a wavelength allocation method in an optical communication system. As shown in FIG. 1, the method includes the following steps:

101. A wavelength allocation table is preset on an ONU, where the wavelength allocation table includes information about a service provider and wavelength information corresponding to the service provider.

The wavelength information corresponding to the service provider in the wavelength allocation table includes an upstream wavelength corresponding to the service provider and a downstream wavelength corresponding to the service provider. Herein, it may be understood that the wavelength information corresponding to the service provider includes an upstream wavelength corresponding to the service provider or a downstream wavelength corresponding to the service provider, or the wavelength information corresponding to the service provider includes an upstream wavelength and a downstream wavelength corresponding to the service provider. The upstream wavelength is used in the upstream direction from the ONU to an OLT, and the ONU transmits an optical signal to the OLT by using the upstream wavelength; the downstream wavelength is used in the downstream direction from the OLT to the ONU, and the ONU receives an optical signal from the OLT by using the downstream wavelength. In addition, the upstream or downstream wavelength may be an actual wavelength, a relative wavelength, or a number of a wavelength grid. If the upstream or downstream wavelength is a relative wavelength, the ONU needs to pre-store a reference wavelength, and the actual wavelength equals the reference wavelength plus the relative wavelength; if the upstream or downstream wavelength is a number of a wavelength grid, the ONU needs to pre-store a mapping table of numbers and actual wavelengths, and may obtain the actual wavelength by searching the mapping table according to the number if required.

Further, the wavelength information corresponding to the service provider in the wavelength allocation table further includes bandwidth usage of the upstream wavelength corresponding to the service provider and bandwidth usage of the downstream wavelength corresponding to the service provider.

Further, before this step, the method may further include:
receiving, by the ONU, a first message sent by the OLT, where the first message includes information about a service provider and wavelength information corresponding to the service provider, and the first message is a physical layer operation and maintenance message, an optical network terminal management and control interface protocol message, or a Simple Network Management Protocol message.

The ONU sets the wavelength allocation table according to the first message. The wavelength allocation table may be stored on the ONU or not stored. If the wavelength allocation table is stored on the ONU, it is necessary to set aging time and periodically update content in the wavelength allocation table according to the set aging time.

Specifically, after an unregistered ONU is powered on, it randomly selects a downstream wavelength (namely, a receive wavelength used for receiving information sent by the OLT) from downstream wavelengths pre-stored by itself and sets the selected downstream wavelength as a temporary operating wavelength of a tunable receiver of an optical module in the ONU. In this way, the tunable receiver of the optical module in the ONU can receive the first message sent by the OLT.

In addition, the information about the service provider and the wavelength information corresponding to the service provider are stored on the OLT side. The OLT periodically performs an ONU automatic discovery process and broadcasts a first message including the wavelength information on all downstream wavelengths. Then, the temporary operating wavelength set by the unregistered ONU receives the first message that is sent by the optical line terminal OLT and includes the information about the service provider and the wavelength information corresponding to the service provider.

102. The ONU obtains, according to the service provider of the ONU, the wavelength information corresponding to the service provider of the ONU by using the wavelength allocation table.

Specifically, the information about the service provider of the ONU may be set and stored on the ONU when the service provider distributes the ONU to a user or installs the ONU, or may be set by a user according to a tool or method provided by the service provider. If required, the information may be remotely updated through a network by the service provider or a network operator after the ONU is registered and goes online.

The ONU searches the set wavelength allocation table according to the service provider of the ONU, and selects an upstream wavelength and a downstream wavelength corresponding to the service provider of the ONU.

103. The ONU transmits or receives an optical signal according to the obtained wavelength information corresponding to the service provider of the ONU.

Specifically, the upstream wavelength and the downstream wavelength corresponding to the service provider of the ONU are set as the operating wavelengths of the ONU, and an optical signal is transmitted or received by using the operating wavelengths of the ONU.

The operating wavelengths of the ONU are the operating wavelengths of the optical module in the ONU, specifically including: an operating wavelength (namely, an upstream wavelength) of a tunable transmitter in the optical module and an operating wavelength (namely, a downstream wavelength) of a tunable receiver in the optical module. The tunable transmitter transmits an upstream optical signal by using the upstream wavelength, and the tunable receiver receives a downstream optical signal by using the downstream wavelength.

The ONU transmits or receives the optical signal by using the obtained upstream wavelength or downstream wavelength corresponding to the service provider of the ONU.

This embodiment of the present invention provides a wavelength allocation method in an optical communication system. A wavelength allocation table is preset on an optical network unit, where the wavelength allocation table includes information about a service provider and wavelength information corresponding to the service provider; the wavelength information corresponding to the service provider of the optical network unit is obtained by using the wavelength allocation table; and an optical signal is transmitted or received according to the obtained wavelength information corresponding to the service provider of the optical network unit. Thereby, the process of wavelength allocation is simplified, quality of service is improved, and user experience is enhanced.

### Embodiment 2

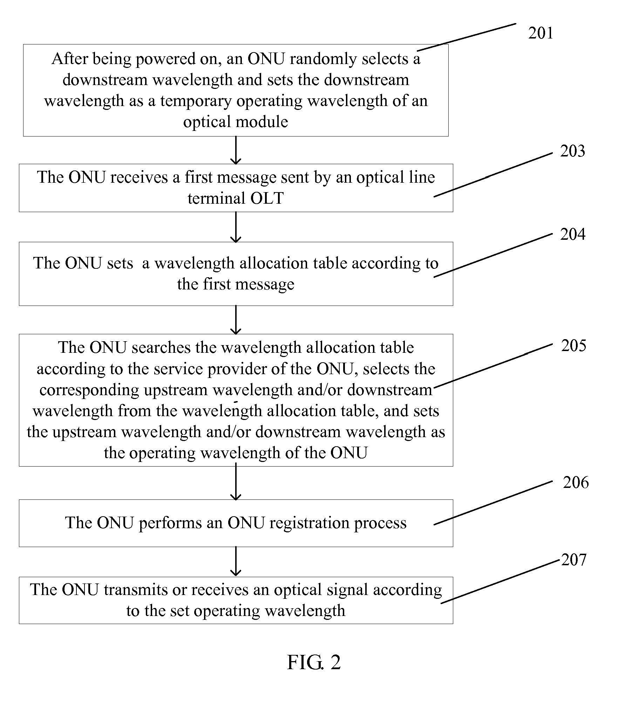

This embodiment of the present invention provides a wavelength allocation method in an optical communication system. As shown in FIG. 2, the method includes the following steps:

201. After being powered on, an ONU randomly selects a downstream wavelength and sets the downstream wavelength as a temporary operating wavelength of an optical module.

After being powered on, an unregistered ONU randomly selects a downstream wavelength from downstream wavelengths pre-stored by itself and sets the selected downstream wavelength as a temporary operating wavelength of a tunable receiver of an optical module in the ONU. The temporary operating wavelength is used to receive a first message sent by an OLT, where the first message includes: information about a service provider and wavelength information corresponding to the service provider.

203. The ONU receives a first message sent by an optical line terminal OLT, where the first message includes: information about a service provider and wavelength information corresponding to the service provider.

Specifically, the OLT periodically performs an ONU automatic discovery process and broadcasts the first message including the information about the service provider and the wavelength information corresponding to the service provider on all downstream wavelengths, and the ONU receives the first message by using the temporary operating wavelength.

Further, the wavelength information corresponding to the service provider in the wavelength allocation table further includes bandwidth usage of an upstream wavelength corresponding to the service provider and bandwidth usage of a downstream wavelength corresponding to the service provider. The service provider may be indicated by an identifier of the service provider. The identifier of the service provider is a globally unique identifier for the service provider recognized by each service provider. Bandwidth usage is a real-time statistical result of bandwidth usage of the upstream wavelength or the downstream bandwidth of the service provider collected by the OLT. Generally, the percentage of actually used bandwidth or bandwidth (fixed bandwidth and assured bandwidth) actually configured for an ONU to maximum physical bandwidth is regarded as bandwidth usage. As the operating status of service providers in different areas varies, the bandwidth usage also differs.

The first message may be a physical layer operation, administration and maintenance (PLOAM, Physical Layer Operation, Administration and Maintenance) message, a management and control interface (OMCI, ONU Management and Control Interface) protocol message, or a Simple Network Management Protocol (SNMP, Simple Network Management Protocol) message.

204. The ONU sets a wavelength allocation table according to the first message.

The ONU records the information about the service provider and the wavelength information corresponding to the service provider in the first message sent by the OLT into the wavelength allocation table.

Optionally, the wavelength allocation table may be stored on the ONU, aging time may be set, and the wavelength allocation table is updated and maintained periodically. Specifically, the wavelength allocation table may be stored in any writable storage medium, such as a RAM, an EEPROM, a flash memory, or a hard disk, and may be searched and modified according to the information about the service provider.

The wavelength allocation table includes the information about the service provider, the upstream wavelength corresponding to the service provider and the downstream wavelength corresponding to the service provider; and optionally, the wavelength allocation table may further include bandwidth usage of the upstream wavelength corresponding to the service provider and bandwidth usage of the downstream wavelength corresponding to the service provider.

205. The ONU searches the wavelength allocation table according to the service provider of the ONU, selects the corresponding upstream wavelength or downstream wavelength from the wavelength allocation table, and sets the upstream wavelength or downstream wavelength as the operating wavelength of the ONU.

The service provider of the ONU may be set when the service provider distributes the ONU to a user or installs the ONU, or may be set by a user according to a tool or method provided by the service provider. The information about the service provider of the ONU may be remotely updated through a network by the service provider or a network operator after the ONU is registered and goes online.

The operating wavelength of the ONU is the operating wavelength of the optical module in the ONU. The operating wavelength includes: an operating wavelength of a tunable transmitter in the optical module and an operating wavelength of a tunable receiver in the optical module. The tunable transmitter is configured to transmit an upstream optical signal, and the tunable receiver is configured to receive a downstream optical signal.

After the ONU receives the first message sent by the OLT, the ONU searches the preset wavelength allocation table according to the service provider of the ONU, selects the wavelength information corresponding to the service provider of the ONU, such as the downstream wavelength, upstream wavelength, bandwidth usage of the upstream wavelength, or bandwidth usage of the downstream wavelength, and sets the selected wavelength as the operating wavelength of the ONU, namely, the operating wavelength of the tunable receiver of the optical module in the ONU. If the service provider has multiple pairs of upstream wavelengths and downstream wavelengths, the ONU may select an upstream wavelength and a downstream wavelength according to additional information such as the bandwidth usage of the upstream bandwidth or the downstream bandwidth. For example, a downstream wavelength with the lowest bandwidth usage and a corresponding upstream wavelength are selected as the operating wavelengths of the ONU, or a downstream wavelength and an upstream wavelength both with the lowest bandwidth usage are selected as the operating wavelengths of the ONU.

In addition, in the process of setting a wavelength, the ONU may not process other messages received from the OLT.

After the ONU sets the operating wavelength, a specific flag bit in an internal memory or register is set to indicate that the operating wavelength of the optical module in the ONU has been set. Then, the state of the ONU is restored to a power-on state. It should be noted that: after the ONU sets the operating wavelength, because the ONU is restored to the power-on state, the ONU further needs to determine whether its operating wavelength has been set. Whether the operating wavelength has been set may be determined by using the specific flag bit. If the operating wavelength has been set, the ONU proceeds to step 206. If the operating wavelength has not been set, the ONU performs steps 203 to 205.

206. The ONU performs an ONU registration process.

If the ONU determines that its operating wavelength has been set, the ONU responds to the OLT by using the set upstream wavelength and ignores (or does not process) information related to wavelength allocation in a downstream message, and the ONU registration process is complete.

Optionally, the OLT may send the wavelength information to the ONU multiple times. The wavelength information sent each time includes a part of additional information, such as the information about the service provider, upstream wavelength and downstream wavelength information corresponding to the service provider, and optional bandwidth usage of the upstream wavelength or the downstream wavelength. Alternatively, the OLT may send all information about the service provider and wavelength information corresponding to the service provider at a time.

Further, if the ONU fails to find the wavelength information corresponding to the service provider of the ONU in the wavelength allocation table, the ONU goes back to step 201, selects another pre-stored downstream wavelength as a temporary operating wavelength of the ONU, and restarts the wavelength allocation process. If the number of ONU wavelength allocation failures exceeds a specified number of times, a fault indication signal is provided, so that network maintenance personnel rectify the fault.

207. The ONU transmits or receives an optical signal according to the set operating wavelength.

This embodiment of the present invention provides a wavelength allocation method in an optical communication system. A wavelength allocation table is preset on an ONU; according to a service provider of the ONU, wavelength information corresponding to the service provider of the ONU is obtained by using the wavelength allocation table; and an optical signal is transmitted or received according to the obtained wavelength information corresponding to the service provider of the ONU. Thereby, the process of wavelength allocation is simplified, quality of service is improved, and user experience is enhanced.

In addition, in this embodiment of the present embodiment, the wavelength information further includes bandwidth usage of an upstream bandwidth or a downstream bandwidth. Different wavelengths of the same service provider may be allocated according to the bandwidth usage, so that the service provider allocates wavelength and bandwidth resources more properly.

An example is used hereinafter to describe the specific process of Embodiments 1 and 2.

It is assumed that a total of four service providers SP1, SP2, SP3, and SP4 allocate wavelengths to a network operator. Because the traffic volume in different areas varies, according to the actual situation, SP1 allocates two pairs of wavelengths λd1\λu1 and λd2\λu2, bandwidth usage of the downstream wavelength λd1 is B1, and bandwidth usage of the downstream wavelength λd2 is B2; SP2 allocates a pair of wavelengths λd3\λu3, and bandwidth usage of the downstream wavelength λd3 is B3; SP3 and SP4 share a pair of wavelengths λd4\λu4, and bandwidth usage of the downstream wavelength λd4 thereof is B43 and B44 respectively (where, λdi indicates a downstream wavelength, λui indicates an upstream wavelength, and i indicates the number of a downstream wavelength or an upstream wavelength). Considering that some service providers do not provide bandwidth usage, bandwidth usage is 0 by default. In this case, bandwidth usage is not suitable for reference.

In this scenario, an OLT sends a PLOAM message to an ONU. The PLOAM message includes information about a service provider and wavelength information corresponding to the service provider. The wavelength information includes an upstream wavelength and a downstream wavelength corresponding to the service provider, and optionally may further include additional information such as bandwidth usage of the upstream wavelength and the downstream wavelength corresponding to the service provider, and the service provider may be indicated by an identifier of the service provider. The PLOAM message including the wavelength information is shown in Table 1.

**Table 1**

| Octet (Octet) | Content (Content) | Description (Description) |
|---|---|---|
| 1-2 | ONU-ID | Directed message to one ONU or broadcast message to all ONUs. As a broadcast to all ONUs, ONU-ID = 0x03FF. |
| 3 | 0x14 | Message type ID "Profile_Extension" |
| 4 | SeqNo | Unicast or broadcast PLOAM sequence number, as appropriate |
| 5-6 | SP-ID #0 | Identifier of service provider SP#0 |
| 7-8 | Downstream wavelength #0 | Wavelength information of downstream channel #0 |
| 9-10 | Upstream wavelength #0 | Wavelength information of upstream channel #0 (corresponding to downstream channel #0) |
| 11-12 | BW_Usage#0 | Bandwidth usage |
| 13-28 | ...... | |
| 29-30 | SP-ID #3 | Identifier of service provider SP#3 |
| 31-32 | Downstream wavelength #3 | Wavelength information of downstream channel #3 |
| 33-34 | Upstream wavelength #3 | Wavelength information of upstream channel #3 (corresponding to downstream channel #3) |
| 35-36 | BW_Usage#3 | Bandwidth usage |
| 37-40 | Padding | Reserved field |
| 41-48 | MIC | Check information |

As described in Table 1, bytes 1-2 in the PLOAM message are identification ID information of the ONU. When the ONU-ID is 0x03FF, the OLT broadcasts a message to all ONUs, and may also directly send a message to the corresponding ONU by using the ONU-ID; the content of byte 3 is 0x14, indicating the message type; byte 4 is a sequence number, which indicates a PLOAM sequence number and may be sent to each ONU in a unicast or broadcast manner; content of bytes 5-6 is SP-ID #0, indicating that the service provider is SP0, and bytes 7-8 indicate downstream wavelength information; bytes 9-10 indicate upstream wavelength information; bytes 11-12 indicate bandwidth usage of an upstream wavelength or a downstream wavelength; by analogy, each of the following bytes separately indicate information about service providers SP2 and SP3, and wavelength information corresponding to the service providers; bytes 37-40 are reserved fields; bytes 41-48 are check information bits. The foregoing content of the bytes is not the only way of expressing content, and may be changed according to bytes. In addition, the number of bytes is not fixed and may be changed according to content.

If an unregistered ONU is added to a WDM/TDM-based hybrid PON system, the service provider of the ONU is SP3. After being powered on, the ONU randomly selects the downstream wavelength λd1 from the pre-stored wavelengths λd1, λd2, λd3, and λd4, and sets λd1 as a temporary operating wavelength of a tunable receiver of an optical module in the ONU.

The OLT periodically performs an ONU automatic discovery process and broadcasts a downstream message including related wavelength information on all downstream wavelengths. A registered ONU will ignore the message, and an unregistered ONU will determine, according to a specific flag bit in an internal memory or register, whether an operating wavelength of an optical module has been set. For example, an unregistered ONU1 determines that an operating wavelength of its optical module has not been set. ONU1 receives a downstream PLOAM message by using a set temporary operating wavelength. The PLOAM message includes information about a service provider and wavelength information corresponding to the service provider. ONU1 records the information about the service provider and the wavelength information corresponding to the service provider in the received PLOAM message into the set wavelength allocation table. The wavelength allocation table is shown in Table 2.

**Table 2**

| Service Provider Identifier | Bandwidth Usage | Downstream Wavelength | Upstream Wavelength |
|---|---|---|---|
| SP1 | B1 | λd1 | λu1 |
| SP1 | B2 | λd2 | λu2 |
| SP2 | B3 | λd3 | λu3 |
| SP3 | B43 | λd4 | λu4 |
| SP4 | B44 | λd4 | λu4 |

According to the content shown in Table 2, ONU1 categorizes information about service providers, wavelength information corresponding to the service providers, and bandwidth usage of the wavelengths in the PLOAM message according to the PLOAM message sent by the OLT, and fills in Table 2. The bandwidth usage of the wavelengths is optional. The content of items in Table 2 may be sent by the OLT to ONU1 at a time or at multiple times.

ONU1 finds wavelength information corresponding to SP3 from the wavelength allocation table according to the identifier of SP3 in the pre-stored service provider information, selects the downstream wavelength λd4 and the upstream wavelength λu4, and sets λd4 and λu4 as the operating wavelengths of the ONU, namely, the operating wavelengths of a tunable transmitter and a tunable receiver of an optical module in the ONU, where, λu4 is the operating wavelength of the tunable transmitter and λd4 is the operating wavelength of the tunable receiver.

After ONU1 sets the operating wavelengths, a specific flag bit in an internal memory or register is set to indicate that the operating wavelengths of ONU1 have been set. Then, the state of ONU1 is restored to a power-on state. In this case, whether the operating wavelengths of ONU1 have been set may be determined by using the specific flag bit. Then, on the set upstream wavelength, the ONU may respond to the ONU1 automatic discovery process newly initiated by the OLT, ignore related wavelength information, and continue to perform automatic ONU1 registration (the registration process of ONU1 is an existing process, which is not described herein).

### Embodiment 3

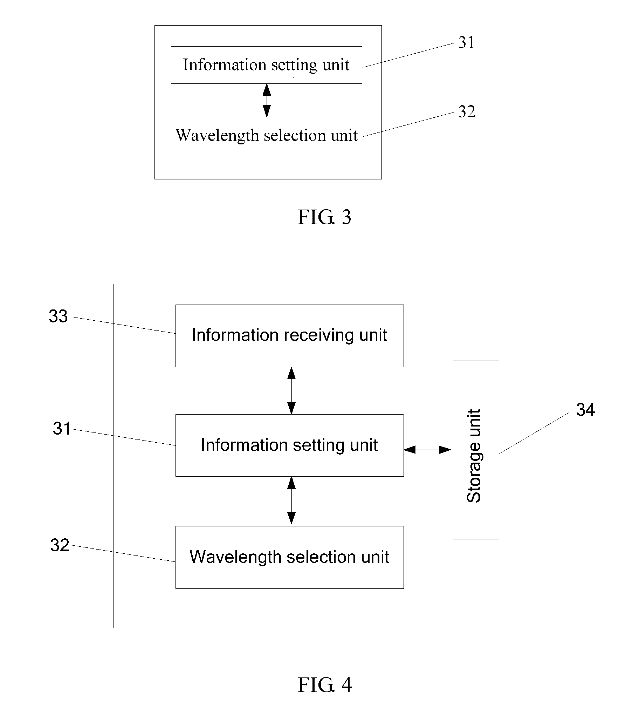

This embodiment of the present invention provides an optical network unit ONU. As shown in FIG. 3, the ONU includes:
an information setting unit 31, configured to preset a wavelength allocation table on the ONU, where the wavelength allocation table includes information about a service provider and wavelength information corresponding to the service provider; and
a wavelength selection unit 32, configured to obtain, according to the service provider of the ONU, the wavelength information corresponding to the service provider of the ONU by using the wavelength allocation table, and transmit or receive an optical signal according to the obtained wavelength information corresponding to the service provider of the ONU.

Further, as shown in FIG. 4, the ONU further includes:
an information receiving unit 33, configured to receive a first message sent by an OLT, where the first message includes information about a service provider and wavelength information corresponding to the service provider, and the first message is a PLOAM message, an OMCI message, or an SNMP message.

The information setting unit 31 is specifically configured to set the wavelength allocation table on the optical network unit according to the first message. For details about the wavelength allocation table, reference may be made to Table 2.

The information receiving unit 33 is further configured to select a downstream wavelength from pre-stored downstream wavelengths, set the downstream wavelength as a temporary operating wavelength of the ONU, and receive, through the temporary operating wavelength, the first message sent by the OLT.

Optionally, as shown in FIG. 4, the ONU further includes:
a storage unit 34, configured to store the wavelength allocation table set by the information setting unit.

The wavelength information corresponding to the service provider in the wavelength allocation table includes an upstream wavelength corresponding to the service provider and a downstream wavelength corresponding to the service provider.

The wavelength information corresponding to the service provider in the wavelength allocation table further includes bandwidth usage of the upstream wavelength corresponding to the service provider and bandwidth usage of the downstream wavelength corresponding to the service provider.

The wavelength selection unit is specifically configured to search the wavelength allocation table according to the service provider of the ONU, select wavelength information corresponding to the service provider of the ONU, where the wavelength information includes the upstream wavelength and the downstream wavelength corresponding to the service provider, set the upstream wavelength and the downstream wavelength corresponding to the service provider as the operating wavelengths of the ONU, and transmit or receive an optical signal by using the operating wavelengths of the ONU.

The ONU includes an optical module. The optical model includes a tunable transmitter and a tunable receiver. The downstream wavelength corresponding to the service provider of the ONU is set as the operating wavelength of the tunable receiver, and the ONU receives an optical signal from the OLT by using the set downstream wavelength; the upstream wavelength corresponding to the service provider of the ONU is set as the operating wavelength of the tunable transmitter, and the ONU transmits an optical signal to the OLT by using the upstream wavelength.

Further, if the service provider has multiple pairs of upstream wavelengths and downstream wavelengths, the ONU may select an upstream wavelength and a downstream wavelength according to additional information such as bandwidth usage of the upstream bandwidth or the downstream bandwidth. Therefore, the wavelength information further includes bandwidth usage of the upstream wavelength corresponding to the service provider and bandwidth usage of the downstream wavelength corresponding to the service provider. For example, a downstream wavelength with the lowest bandwidth usage and a corresponding upstream wavelength are selected as the operating wavelengths of the ONU, or a downstream wavelength and an upstream wavelength both with the lowest bandwidth usage are selected as the operating wavelengths of the ONU.

This embodiment of the present invention provides an optical network unit. An information setting unit presets a wavelength allocation table on the ONU, where the wavelength allocation table includes information about a service provider and wavelength information corresponding to the service provider; and a wavelength selection unit obtains, according to the service provider of the ONU, the wavelength information corresponding to the service provider of the ONU by using the wavelength allocation table, and transmits or receives an optical signal according to the obtained wavelength information corresponding to the service provider of the ONU. Thereby, the process of wavelength allocation is simplified, quality of service is improved, and user experience is enhanced.

In addition, in this embodiment of the present invention, the related wavelength information further includes bandwidth usage of an upstream bandwidth or a downstream bandwidth. Different wavelengths of the same service provider may be allocated according to bandwidth usage, so that the service provider allocates wavelength and bandwidth resources more properly.

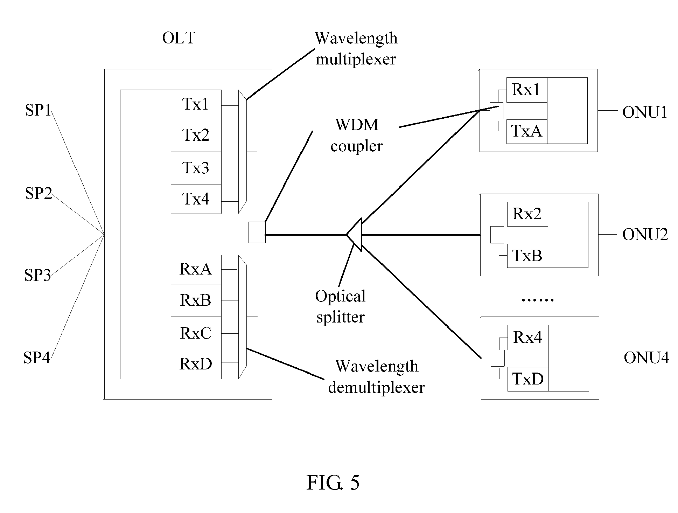

As shown in FIG. 5, an embodiment of the present invention further provides an optical network system. The system includes an ONU and an OLT. The ONU includes:
an information setting unit, configured to preset a wavelength allocation table on the ONU, where the wavelength allocation table includes information about a service provider and wavelength information corresponding to the service provider; and
a wavelength selection unit, configured to obtain, according to the service provider of the ONU, the wavelength information corresponding to the service provider of the ONU by using the wavelength allocation table, and transmit or receive an optical signal according to the obtained wavelength information corresponding to the service provider of the ONU.

The OLT is configured to send a first message to the ONU, and complete an ONU registration process after receiving a response message returned by the ONU.

Specifically, reference may be made to the optical network system shown in FIG. 5. On the OLT side, there are four service providers SP1 to SP4. A network operator will allocate wavelengths according to the operating status of each service provider. The OLT stores information about the service providers and wavelength information corresponding to the service providers, and the OLT periodically loads the first message on all downstream wavelengths in the system and sends out the message as a downstream message through four transmitters Tx1 to Tx4. These downstream wavelengths coexist in a WDM manner through a wavelength multiplexer and a wavelength division multiplexing (wavelength division multiplexing, WDM) coupler, and the first message is broadcast to ONU1 to ONU4 through an optical splitter when transmitted to the user side. Using ONU1 as an example, if ONU1 is registered, ONU1 ignores the first message; if ONU1 is unregistered, ONU1 randomly selects a temporary operating wavelength, receives the first message from Tx1 of the OLT by using the temporary operating wavelength, sets an operating wavelength for an optical module in ONU1 according to the wavelength allocation method, and starts to perform the ONU1 registration process. After ONU1 is registered, ONU1 can communicate with the OLT by using the set operating wavelength. ONU1 loads an upstream optical signal onto an upstream wavelength and sends out the optical signal to the OLT through a tunable transmitter TxA. After the optical signal enters the OLT, any one of the four receivers RxA to RxD of the OLT receives the optical signal through the WDM coupler and a wavelength demultiplexer. For ONU2 to ONU4, reference may be made to the operations on ONU1. The embodiment of the present invention provides an optical network system. A wavelength allocation table is preset on an ONU; according to a service provider of the ONU, wavelength information corresponding to the service provider of the ONU is obtained by using the wavelength allocation table; and an optical signal is transmitted or received according to the obtained wavelength information corresponding to the service provider of the ONU. Thereby, the process of wavelength allocation is simplified, quality of service is improved, and user experience is enhanced.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A wavelength allocation method in an optical communication system, comprising:
presetting a wavelength allocation table on an optical network unit, wherein the wavelength allocation table comprises information about a service provider and wavelength information corresponding to the service provider;
obtaining, according to the service provider of the optical network unit, the wavelength information corresponding to the service provider of the optical network unit by using the wavelength allocation table; and
transmitting or receiving an optical signal according to the obtained wavelength information corresponding to the service provider of the optical network unit.

2. The wavelength allocation method according to claim 1, wherein: before the presetting a wavelength allocation table on an optical network unit, the method further comprises:
receiving a first message sent by an optical line terminal, wherein the first message comprises information about the service provider and wavelength information corresponding to the service provider, and the first message is a physical layer operation and maintenance message, an optical network terminal management and control interface protocol message, or a Simple Network Management Protocol message; and
the presetting a wavelength allocation table on an optical network unit specifically comprises:
setting the wavelength allocation table on the optical network unit according to the first message.

3. The wavelength allocation method according to claim 2, wherein the method further comprises: storing the wavelength allocation table.

4. The wavelength allocation method according to any one of claims 1 to 3, wherein the wavelength information corresponding to the service provider in the wavelength allocation table comprises an upstream wavelength corresponding to the service provider or a downstream wavelength corresponding to the service provider; and
the obtaining the wavelength information corresponding to the service provider of the optical network unit comprises:
obtaining the upstream wavelength corresponding to the service provider of the optical network unit or the downstream wavelength corresponding to the service provider of the optical network unit.

5. The wavelength allocation method according to any one of claim 4, wherein the wavelength information corresponding to the service provider in the wavelength allocation table further comprises bandwidth usage of the upstream wavelength corresponding to the service provider and bandwidth usage of the downstream wavelength corresponding to the service provider.

6. The wavelength allocation method according to claim 4, wherein the transmitting or receiving an optical signal according to the obtained wavelength information corresponding to the service provider of the optical network unit comprises:
setting the upstream wavelength and downstream wavelength corresponding to the service provider of the optical network unit as operating wavelengths of the optical network unit, and transmitting or receiving the optical signal by using the operating wavelengths of the optical network unit.

7. An optical network unit, comprising:
an information setting unit, configured to preset a wavelength allocation table on the optical network unit, wherein the wavelength allocation table comprises information about a service provider and wavelength information corresponding to the service provider; and
a wavelength selection unit, configured to obtain, according to the service provider of the optical network unit, the wavelength information corresponding to the service provider of the optical network unit by using the wavelength allocation table, and transmit or receive an optical signal according to the obtained wavelength information corresponding to the service provider of the optical network unit.

8. The optical network unit according to claim 7, wherein the optical network unit further comprises:
an information receiving unit, configured to receive a first message sent by an optical line terminal, wherein the first message comprises information about the service provider and wavelength information corresponding to the service provider, and the first message is a physical layer operation and maintenance message, an optical network terminal management and control interface protocol message, or a Simple Network Management Protocol message; and
the information setting unit, specifically configured to set the wavelength allocation table on the optical network unit according to the first message.

9. The optical network unit according to claim 8, wherein the optical network unit further comprises:
a storage unit, configured to store the wavelength allocation table set by the information setting unit.

10. The optical network unit according to any one of claims 7 to 9, wherein the wavelength information corresponding to the service provider in the wavelength allocation table comprises an upstream wavelength corresponding to the service provider or a downstream wavelength corresponding to the service provider.

11. The optical network unit according to claim 10, wherein the wavelength information corresponding to the service provider in the wavelength allocation table further comprises bandwidth usage of the upstream wavelength corresponding to the service provider or bandwidth usage of the downstream wavelength corresponding to the service provider.

12. An optical network system, wherein the optical network system comprises: an optical line terminal and at least one optical network unit according to any one of claims 7 to 11.
